(19) Europäisches Patentamt

European Patent Office

Office européen des brevets

(11) **EP 1 447 356 B1**

(12) **EUROPÄISCHE PATENTSCHRIFT**

(45) Veröffentlichungstag und Bekanntmachung des Hinweises auf die Patenterteilung:
**22.03.2006  Patentblatt 2006/12**

(51) Int Cl.:
*B65G 23/12* *(2006.01)*     *B65G 47/88* *(2006.01)*

(21) Anmeldenummer: **02028950.0**

(22) Anmeldetag: **24.12.2002**

(54) **Rollenbahn für zu transportierende und/oder zu lagernde Waren**

Rollerway for conveying and/or storing articles

Convoyeur à rouleaux pour le transport et/ou le stockage d'articles

(84) Benannte Vertragsstaaten:
**AT BE BG CH CY CZ DE DK EE ES FI FR GB GR IE IT LI LU MC NL PT SE SI SK TR**

(43) Veröffentlichungstag der Anmeldung:
**18.08.2004  Patentblatt 2004/34**

(73) Patentinhaber: **Dynamic Systems Engineering b.v.**
**7005 AG Doetinchem (NL)**

(72) Erfinder: **Bruigom, Marco**
**7223 KH Baak (NL)**

(74) Vertreter: **Christophersen, Ulrich Rudolf et al**
**Christophersen & Partner**
**Patentanwälte**
**Feldstrasse 73**
**40479 Düsseldorf (DE)**

(56) Entgegenhaltungen:
**WO-A-01/83336          GB-A- 782 571**

**Beschreibung**

Die Erfindung betrifft eine Rollenbahn für zu transportierende und/oder zu lagernde Waren, gemäß dem Oberbegriff des Anspruchs 1.

Eine solche Rollenbahn für Stückgüter ist z. B. aus der US 4,266,659 bekannt. Ein Endlosriemen treibt die langgestreckten Walzen der Rollenbahn durch Friktion an, wozu der Antriebsriemen von unten an den Walzen anliegt. Gegendruckrollen unterhalb des Antriebsriemens erhöhen den Druck auf den Antriebsriemen und verbessern dadurch dessen Anlage an den Förderwalzen. Sowohl am Förderanfang wie auch am Förderende der Förderbahn ist der Antriebsriemen über Umlenkrollen geführt. Zum Antrieb des Antriebsriemens ist unter dem Gestell der Rollenbahn ein auf eine Antriebsscheibe wirkender Elektromotor angeordnet. Zur Verbesserung der Kraftübertragung auf den Antriebsriemen umschlingt dieser die Antriebsscheibe über einen Winkel von mehr als 180°. Um dies zu erreichen, ist der Antriebsscheibe, bezogen auf die Riemenlaufrichtung, eine erste Riemenscheibe vorgeschaltet, und eine zweite Riemenscheibe nachgeschaltet. Auf dem Weg von der ersten Riemenscheibe zu der zweiten Riemenscheibe ergibt sich der Umschlingungswinkel der motorgetriebenen Antriebsscheibe von mehr als 180°.

Eine weitere Rollenbahn mit den gattungsgemäßen Merkmalen ist aus der WO 01/83336 und insbesondere der dortigen Fig. 9 bekannt. Die Antriebsscheibe für den Antriebsriemen der Rollenbahn befindet sich hierbei nicht unter der Rollenbahn selbst, sondern im Bereich von deren Förderende. Auf diese Weise lassen sich für den Antrieb der Rollenbahn teilweise dieselben Antriebselemente verwenden, wie für eine im Bereich des Förderendes der Rollenbahn angeordnete Entnahmevorrichtung, mittels der eine in den Förderweg der Rollenbahn einfahrbare Sperre zeitweise gelöst werden kann, um so eine auf der Rollenbahn angeordnete Ware für den weiteren Transport freizugeben. Anwendung findet diese Rollenbahn im Rahmen einer Kommissionieranlage mit mehreren teilweise nebeneinander und teilweise übereinander angeordneten Lagergassen für die Lagerung von Stückgütern. Durch Freigabe der am Förderende der Rollenbahn angeordneten Entnahmevorrichtung bzw. deren Sperre läßt sich jeweils ein Stückgut auslagern.

Ebenso wie bei der eingangs genannten US 4,266,659 ist auch bei der WO 01/83336 der eigentlichen Antriebsscheibe eine erste Riemenscheibe vorgeschaltet, und eine zweite Riemenscheibe nachgeschaltet, jeweils bezogen auf die Riemenlaufrichtung. Wiederum wird auf diese Weise erreicht, daß der Umschlingungswinkel des Riemens um die Antriebsscheibe mehr als 180° beträgt.

Bei Antrieben für Rollenbahnen der gattungsgemäßen Art ist es aus Gründen der Kraftübertragung auf den Antriebsriemen grundsätzlich anzustreben, die Antriebsscheibe dort anzuordnen, wo der Obertrum des Antriebsriemens die Rollenbahn verläßt, d. h. bevor die Rückführung als Untertrum erfolgt. In praktisch-konstruktiver Hinsicht bedeutet dies, den Antrieb für den Antriebsriemen im Bereich des Förderanfangs der Rollenbahn anzuordnen. In vielen Fällen der Praxis ist dies jedoch nicht möglich, wie die voranstehend beschriebenen Druckschriften zum Stand der Technik zeigen. Bei der Konstruktion nach der US 4,266,659 ist, vermutlich mit dem Ziel einer kurzen Bauweise der Rollenbahn ohne Überstände, deren Antrieb direkt unter der Rollenbahn angeordnet. Hierbei unterteilt sich der Untertrum des Antriebsriemens in einen ziehenden Abschnitt vor dem Antrieb sowie einen im wesentlichen gezogenen Abschnitt hinter dem Antrieb. Bereits dies ist nachteilig, da sich aufgrund dieser unterschiedlichen Zuglastverteilung in den Abschnitten des Antriebsriemens eine ungleiche Zugspannung einstellt, die auch im Bereich des Obertrums und damit des Antriebs der Rollenbahn zu einer über deren Länge unterschiedlichen Dehnung führt. Folge hiervon ist, daß einige der Rollen mit größerer Friktion angetrieben werden, als andere Rollen.

Noch ausgeprägter ist das geschilderte Problem bei einer Konstruktion wie in der WO 01/83336 beschrieben, d. h. bei Anordnung des Antriebs am Förderende der Rollenbahn und damit gleichsam am "falschen" Ende. Der gesamte Untertrum des Antriebsriemens ist mit voller Zugkraft belastet, in dem auf die Rollen bzw. Walzen einwirkenden Obertrum stellt sich auf diese Weise eine über die Länge sehr ungleiche Verteilung der Zugspannung ein. Folge hiervon ist wiederum eine unterschiedlich große Friktion und damit übertragene Antriebsleistung auf die einzelnen Rollen bzw. Walzen.

Der Erfindung liegt die **Aufgabe** zugrunde, eine Rollenbahn für zu transportierende und/oder zu lagernde Waren zu schaffen, bei der eine relativ gleichmäßige Verteilung der Antriebsspannung über die Länge des Antriebsriemens selbst dann erzielbar ist, wenn der Riemenantrieb nicht am Förderanfang der Rollenbahn angeordnet ist.

Diese Aufgabe wird durch die Merkmale des Anspruchs 1 gelöst.

Zur Erzielung einer zuverlässigen, konstruktiv einfachen Führung für den Träger wird bei einer Ausgestaltung der Rollenbahn vorgeschlagen, daß der Träger in einer Langlochführung geführt ist.

Ferner kann die Führung für den Träger entweder eine gerade Führung sein, oder die Führung kann in einem Bogen um die Antriebsscheibe herumgeführt sein. Zur Erzielung einer möglichst kontinuierlichen Bandspannung ist die zweitgenannte Möglichkeit zu bevorzugen.

Eine weitere bevorzugte Ausgestaltung der Rollenbahn ist gekennzeichnet durch im Bereich beider Enden der Rollenbahn unter Bildung eines die Rollen in Drehung versetzenden Obertrums und eines passiven Untertrums angeordnete Umlenkmittel für den Antriebsriemen, wobei das im Bereich des Förderendes der Rollenbahn angeordnete Umlenkmittel die Antriebsscheibe ist. Vorzugsweise ist das im Bereich des Förderanfangs der Rollenbahn angeordnete Umlenkmittel eine Riemenscheibe, deren Position einstellbar ist. Auf diese Weise läßt sich die Grundeinstellung der Bandspannung in Abhängigkeit von der Bandlänge vorwählen. Ferner wird ein Bandwechsel erleichtert, außerdem lassen sich geringe Längenänderungen beim Wechsel von einem alten, verschlissenen Antriebsband auf ein neues Antriebsband ausgleichen.

Gemäß einer besonders bevorzugten Ausgestaltung der Rollenbahn sind die Rollen oder Walzen mit drehbar angeordneten Kraftübertragungselementen versehen, die über den Antriebsriemen in Drehung versetzbar sind, und das übertragene Drehmoment zwischen dem Kraftübertragungselement und der jeweiligen Rolle bzw. Walze ist geringer, als das übertragbare Drehmoment zwischen dem Antriebsriemen und dem Kraftübertragungselement. Vorzugsweise ist das Kraftübertragungselement eine Buchse, die mit ihrer Innenfläche außen auf einem mit der Rolle bzw. Walze fest verbundenen, zylindrischen Lagerabschnitt der Rolle bzw. Walze drehbar gelagert ist. Die Rollen bzw. Walzen sind bei dieser Ausführungsform mit ihren beiden Enden in feststehenden Profilen der Rollenbahn gelagert.

Ferner vorgeschlagen wird, daß der Obertrum des Antriebsriemens zwischen den Buchsen und Druckwiderlagern hindurchgeführt ist, wobei die Druckwiderlager gegen die Buchsen zweier aufeinanderfolgender Rollen bzw. Walzen zugleich gerichtete Gegendruckrollen sind. Auf diese Weise läßt sich eine gewisse Einpresstiefe des Antriebsbandes erzielen. Dieses führt nicht schnurgerade zwischen den Buchsen und den Gegendruckrollen hindurch, sondern wird sowohl an den Buchsen wie auch an den Gegendruckrollen leicht umgelenkt. Das Antriebsmoment wird auf diese Weise nicht nur linienförmig übertragen, sondern auf einer gewissen Fläche, was insgesamt die Antriebsleistung auf die Buchsen verbessert.

Die erfindungsgemäße Rollenbahn läßt sich insbesondere im Rahmen eines vollautomatischen Kommissionierlagers einsetzen. Hierzu wird mit einer bevorzugten Ausgestaltung vorgeschlagen, daß die Rollenbahn an ihrem Förderende mit einer in den Förderweg ragenden, zur Freigabe des Förderweges absenkbaren Sperre versehen ist, und daß der Antrieb der Sperre von derselben Hauptantriebswelle abgeleitet wird, wie der Antrieb der Antriebsscheibe. Zur Reduzierung der insgesamt erforderlichen Antriebselemente für Rollenbahn bzw. Kommissionierlager ist ferner von Vorteil, wenn im Falle eines weiteren Horizontalförderers hinter der Sperre auch der Antrieb dieses weiteren Horizontalförderers von der Hauptantriebswelle abgeleitet wird.

Weitere Vorteile und Einzelheiten werden nachfolgend unter Bezugnahme auf die Zeichnungen erläutert. Darin zeigen:

Fig. 1a     in Seitenansicht eine Ausführungsform des erfindungsgemäßen Rollenbahn ohne Belastung;

Fig. 1b     die Rollenbahn nach Fig. 1a bei Belastung;

Fig. 2a     eine gegenüber Fig. 1a abgewandelte Ausführungsform der Rollenbahn in unbelastetem Zustand;

Fig. 2b     die Rollenbahn nach Fig. 2a bei Belastung;

Fig. 3     in stark übertriebener Darstellung vier Walzen bzw. Rollen der Rollenbahn mit zwei Gegendruckrollen sowie einem hindurchgeführten Antriebsriemen;

Fig. 4a     in vergrößerter und zu dem schematischer Darstellung die geometrischen Verhältnisse an den Riemenscheiben, über die der Antriebsriemen geführt ist, und zwar im Falle der unbelasteten Rollenbahn und

Fig. 4b     die entsprechenden geometrischen Verhältnisse, diesmal im Falle der Belastung der Rollenbahn.

Die verschiedenen Figuren der Zeichnung zeigen Rollenbahnen, wie sie im Grundaufbau aus der interantionalen Patentanmeldung WO 01/83336 A1 derselben Anmeldung bekannt sind. Zum Einsatz kommen solche Rollenbahnen in ausgedehnten Kommissionierlagern für Stückgüter wie z. B. gefüllte Getränkekisten und Lebensmittel im Kartongebinden. Solche Waren haben im Großhandel eine sehr hohe Umschlagrate. Demgemäß sind, wie es ebenfalls in der WO 01/83336 A1 im einzelnen beschrieben ist, eine Vielzahl der erfindungsgemäßen Rollenbahnen im Parallelbetrieb zum Einsatz, wobei jede Rollenbahn eine Lagergasse für Waren bzw. Stückgüter derselben Art bildet.

Die Rollenbahn besteht aus einer Vielzahl hintereinander angeordneter Rollen oder Walzen 1, die über ein gemeinsames Antriebsmittel in Drehung versetzbar sind. Das gemeinsame Antriebsmittel ist ein endloser Antriebsriemen 2, der im Bereich der Enden der Rollenbahn über Riemenscheiben 3, 4 umgelenkt ist. Die Riemenscheibe 3 ist angetrieben, wohingegen die Riemenscheibe 4 antriebslos ist.

Die Antriebsscheibe 3 befindet sich unter dem Entnahmebereich 5 der Vorrichtung. In dem Entnahmebereich 5 ist die Vorrichtung mit einem relativ kurzen, jedoch schnell laufenden Förderband 6 versehen, über das die Waren laufen, nachdem diese die Rollenbahn einzeln verlassen haben. Zwischen Rollenbahn und Förderband 6 kann eine auf der Zeichnung durch den Pfeil 7 symbolisierte Sperre angeordnet sein. Bei angehobener Sperre 7 werden die auf den Walzen der Rollenbahn aufliegenden Waren bzw. Warengebinde zurückgehalten bzw., bei einer Vielzahl dort befindlicher Warengebinde, aufgestaut. Wird die Sperre 7 gelöst, wozu sie vorzugsweise bis unter die Förderebene abgesenkt wird, wird hierdurch eine Ware freigegeben, diese erreicht daraufhin das schnell laufende Förderband 6 und gelangt von dort aus zu weiteren Transporteinrichtungen. Unmittelbar nach dem Entnehmen dieser Ware wird die Sperre 7 vollautomatisch wieder angehoben, so daß alle weiteren Waren auf der Rollenbahn zurückgehalten werden, bis der nächste Entnahmevorgang beginnt etc. Auch insoweit sind viele technische Einzelheiten in der internationalen Patentanmeldung WO 01/83336 A1 beschrieben.

Die Rollenbahn ist nicht exakt horizontal ausgerichtet, sondern trotz ihres Antriebs leicht abschüssig geneigt. Der Neigungswinkel $\alpha$ ist relativ gering und beträgt vorzugsweise nur 4 %.

Zum Antrieb der einzelnen Walzen bzw. Rollen 1 der Rollenbahn ist der Obertrum 21 des endlosen Antriebsriemens 2 an der Unterseite der Rollen 1 entlang geführt, so daß der Antriebsriemen 2 dort unter entsprechender Reibung anliegt und die Rollen 1 in Drehung versetzt. Zur Erhöhung des Drucks des Antriebsriemens 2 auf die einzelnen Rollen 1 sind in den seitlichen Trägerprofilen 8 der Rollenbahn ferner Gegendruckrollen 9 gelagert. Bewährt hat sich eine Ausführungsform, bei der die Anzahl der Förderrollen 1 doppelt so groß ist, wie die Anzahl der unterhalb angeordneten Gegendruckrollen 9.

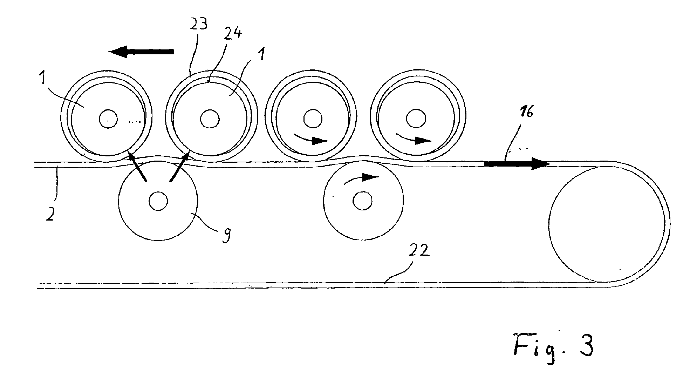

Die Wirkung der Gegendruckrollen 9 ist in vergrößertem Maßstab in der Fig. 3 dargestellt. Dort ist auch erkennbar, wie jede der frei mitlaufenden Gegendruckrollen 9 mittig unter jeweils zwei der Transportrollen 1 angeordnet ist. Der Antriebsriemen 2 wirkt nicht unmittelbar auf die einzelnen Walzen 1 bzw. Rollen ein, sondern mittelbar unter Zwischenschaltung einer frei drehbar auf der jeweiligen Walze 1 angeordneten Buchse 23. Die Buchse 23 stellt ein Kraftübertragungselement dar, welches mit seiner Innenfläche außen auf einem mit der Rolle bzw. Walze 1 fest verbundenen, zylindrischen Lagerabschnitt 24 drehbar gelagert ist. Hierbei ist die Reibung zwischen Antriebsriemen 2 und der Buchse 23 größer, als die Reibung zwischen der zylindrischen Innenfläche der Buchse 23 und dem zylindrischen Lagerabschnitt 24 der Rolle bzw. Walze. Dies trägt dazu bei, den Staudruck der sich rückstauenden Waren in beherrschbaren Grenzen zu halten.

Fig. 3 läßt ferner die beim Hindurchlaufen des Antriebsbandes 2 zwischen den Buchsen 23 und den Gegendruckrollen 9 sich einstellende Einpreßtiefe des Antriebsbandes erkennen. Das Antriebsband führt nicht nur gerade zwischen den Buchsen und den Gegendruckrollen hindurch, sondern wird sowohl an den Buchsen wie auch an den Gegendruckrollen leicht umgelenkt. Das Antriebsmoment wird auf diese Weise nicht nur linienförmig übertragen, sondern auf einer gewissen Fläche, was insgesamt die Antriebsleistung auf die Buchsen verbessert.

Die Umlenkung des Antriebsriemens 2 erfolgt, wie bereits beschrieben, einerseits an der Antriebsscheibe 3 und andererseits an der mitlaufenden Riemenscheibe 4. Zur Einstellung der Zugspannung in dem Antriebsriemen 2 ist die Riemenscheibe 4, welche sich im Bereich des Förderanfangs 10 der Rollenbahn befindet, in ihrer Position einstellbar. Vorzugsweise ist hierzu eine Einstellschraube 11 vorgesehen, mit der sich die Achse der Riemenscheibe 4 horizontal in Richtung der Rollenbahn verlagern läßt, um so die Spannung im Antriebsriemen 2 auf einen gewünschten Wert einzustellen. Auf diese Weise läßt sich auch bei einem Wechsel des Antriebsriemens 2 dieser zunächst entspannen, bevor ein neuer Antriebsriemen zwischen den einzelnen Riemenscheiben hindurchgeführt wird.

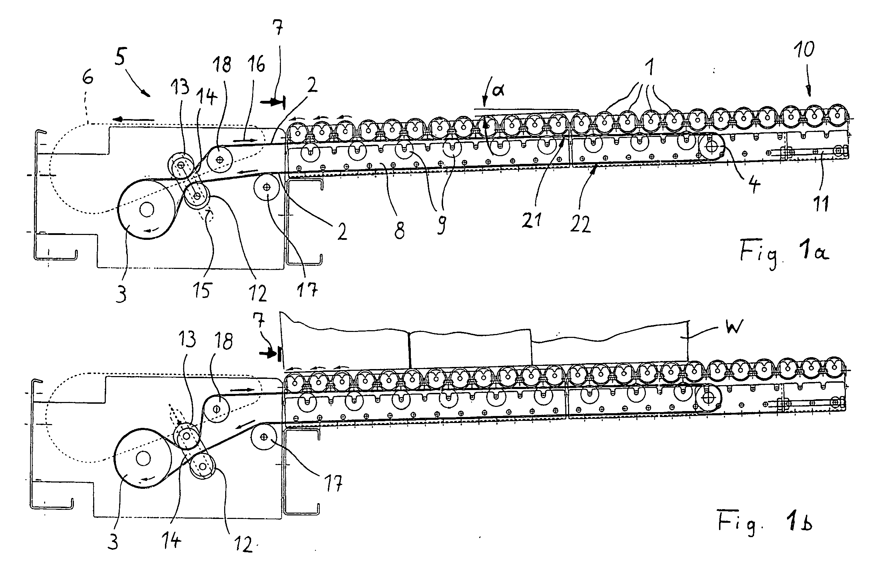

Zusätzlich zu den beiden den Obertrum 21 vom Untertrum 22 trennenden Riemenscheiben 3 und 4 ist der Antriebsriemen 2 ferner über zwei in unmittelbarer Nähe zu der Antriebsscheibe 3 angeordnete Riemenscheiben 12, 13 geführt. Die Riemenscheiben 12, 13 sind frei drehbar, also nicht angetrieben. Sie sitzen auf einem gemeinsamen Träger 14, wobei dieser Träger 14 tangential zum Umfang der Antriebsscheibe 3 frei beweglich geführt ist. Die Führung für den Träger 14 ist beim Ausführungsbeispiel eine Langlochführung 15, d. h. der Träger 14 kann sich entlang der durch das Langloch 15 vorgegebenen Richtung hin- und herbewegen, wobei die auf dem Träger 14 drehbar angeordneten kleinen Riemenscheiben 12, 13 dieser Bewegung zwangsläufig folgen. Die Führung bzw. Langlochführung 15 für den Träger 14 befindet sich möglichst nahe an der Antriebsscheibe 3, ferner liegen auch die beiden kleinen Riemenscheiben 12, 13 nahe beieinander, wobei sich zwischen ihnen genug Platz für den hier in die eine wie die andere Richtung hindurchlaufenden Antriebsriemen befindet. Infolge dieser geometrischen Verhältnisse wird ein maximaler Umschlingungswinkel des Antriebsriemens 2 um die Antriebsscheibe 3 erreicht. Hierzu läuft der Riemen zunächst über die untere Riemenscheibe 12, umschlingt dann die Antriebsscheibe 3 auf einem Winkel von ca. 270°, um schließlich über die zweite, obere Riemenscheibe 13 zu laufen. Demgemäß ist, bezogen auf die Riemenlaufrichtung 16, die erste Riemenscheibe 12 der Antriebsscheibe 3 in der Weise vorgeschaltet und die zweite Riemenscheibe 13 der Antriebsscheibe 3 in der Weise nachgeschaltet, daß der Antriebsriemen auf seinem Weg von der ersten Riemenscheibe 12 zu der zweiten Riemenscheibe 13 die Antriebsscheibe über einen Winkel von ca. 270° und damit auf jeden Fall von mehr als 180° umschlingt. Diese Umschlingung weist die genannte Größenordnung unabhängig davon auf, ob der Träger 14 für die beiden kleinen Riemenscheiben 12, 13 gemäß Fig. 1a sich weiter oben in der Führung 15 befindet oder gemäß Fig. 1b weiter unten in der Führung 15.

Bevor der Antriebsriemen 2 in Riemenlaufrichtung 16 auf die untere Riemenscheibe 12 gelangt, wird er an einer ortsfest montierten, frei laufenden Riemenscheibe 17 nach unten abgelenkt. Ferner ist eine ebenfalls ortsfeste, frei laufende Riemenscheibe 18 vorgesehen, über die der Antriebsriemen auf seinem Weg von der zweiten Riemenscheibe 13 zu den Walzen 1 der Rollenbahn geführt ist.

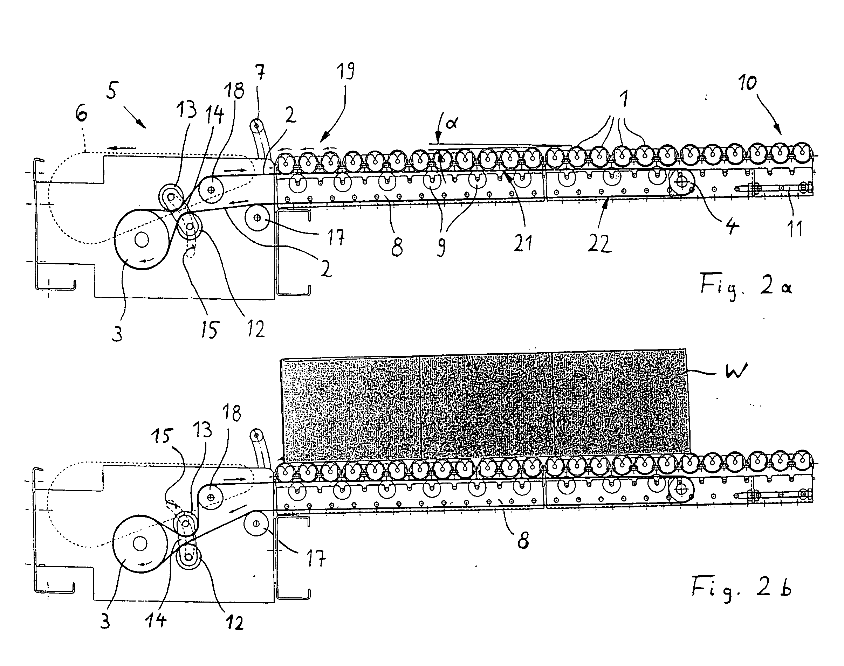

Die Fign. 2a und 2b zeigen eine gegenüber den Fign. 1a und 1b abgewandelte Ausführungsform. Hierbei ist der Träger mit den beiden Riemenscheiben 12, 13 nicht entlang einer geraden Führung wie z. B. einer geraden Langlochführung beweglich, sondern entlang einer Führung 15a, die in einem Bogen um die Antriebsscheibe 3 herumführt. Der Krümmungsradius dieses Bogens ist auf die Drehachse der Antriebsscheibe 3 bezogen. Wiederum ist der Träger, auf dem beide Riemenscheiben 12, 13 drehbar gelagert angeordnet sind, dergestalt ausgebildet, daß der Träger 14 als Ganzes zwar eine Relativbewegung tangential zum Umfang der Antriebsscheibe 3 ausüben kann, jedoch der Abstand der ersten Riemenscheibe 12 zu der zweiten Riemenscheibe 13 konstant bleibt. Der Umschlingungswinkel um die Antriebsscheibe 3 ist bei der Ausführungsform nach den Fign. 2a und 2b bei jeder Stellung des Trägers 14 exakt gleich.

Der Vorteil des tangential zu der Antriebsscheibe 3 beweglichen Trägers 14 besteht in der wesentlich verbesserten Übertragung der Antriebsleistung von der an einen Elektromotor gekoppelten Antriebsscheibe 3 auf den Antriebsriemen 2. Insbesondere arbeitet das System selbstregulierend. Je höher der Widerstand der Rollen 1 infolge der an der Sperre 7 zurückgehaltenen, auf der Rollenbahn aufliegenden Waren W ist, um so größer wird die Zugkraft in dem Untertrum 22 des Antriebsriemens 2. Diese Erhöhung der Zugkraft führt gemäß Fig. 1b bzw. 2b zu einer erhöhten Riemenspannung auch auf dem Abschnitt zwischen Riemenscheibe 17 und Antriebsscheibe 3. Hierdurch wird die erste Riemenscheibe 12 heruntergezogen, wie dies der Vergleich der Fig. 1a mit der Fig. 1b zeigt. Da die erste Riemenscheibe 12 über den Träger 14 mit der zweiten Riemenscheibe 13 gekoppelt ist, wird auch die zweite Riemenscheibe 13 heruntergezogen. Hierdurch wiederum erhöht sich die durch Reibung übertragbare Antriebsleistung von der Antriebsscheibe 3 auf den Obertrum 21 des Antriebsriemens. Außerdem wird auch der sich durch die höhere Belastung des Antriebsriemens 2 einstellende Reck des Antriebsriemens 2 teilweise ausgeglichen bzw. kompensiert. Insgesamt lassen sich höhere Antriebsleistungen erzielen bzw. gleiche Antriebsleistungen bei geringerer Bandspannung und damit geringerer Beanspruchung des elektrischen Antriebes für die Antriebsscheibe 3. Diese Vorteile werden erreicht, obwohl der Antrieb am Förderende 19 der Rollenbahn angeordnet ist und damit gleichsam am "falschen" Ende.

Von Vorteil ist ferner, dass wegen der mit der Erfindung erzielten Selbstregulierung die Bandspannung in dem Antriebsriemen 2, über die Länge der Rollenbahn betrachtet, nur geringfügig abfällt. Insbesondere ist die Bandspannung im Bereich des Förderendes 19 nur geringfügig kleiner, als die Bandspannung im Bereich des Förderanfanges 10 der Rollenbahn. Es besteht nur ein geringer Spannungsunterschied zwischen dem auf die Antriebsscheibe 3 auflaufenden Abschnitt des Antriebsriemens, und dem die Antriebsscheibe verlassenden Abschnitt des Antriebsriemens. Würde der bewegliche Träger 14 fehlen, so wäre der Abfall der Bandspannung über die Länge der Rollenbahn sehr viel größer, mit entsprechenden Nachteilen für die Transporteigenschaften der Rollenbahn.

Vorzugsweise ist der Antrieb der in den Figuren 1a bis 2b eingezeichneten Sperre 7 von der selben Hauptantriebswelle abgeleitet, wie auch der Antrieb der Antriebsscheibe 3. Zur Reduzierung der insgesamt erforderlichen Antriebselemente für die Rollenbahn bzw. für das Kommissionierlager ist es ferner von Vorteil, wenn auch der Antrieb für das Förderband 6 des hinter der Sperre 7 angeordneten Horizontalförderers von einer solchen gemeinsamen Hauptantriebswelle abgeleitet wird.

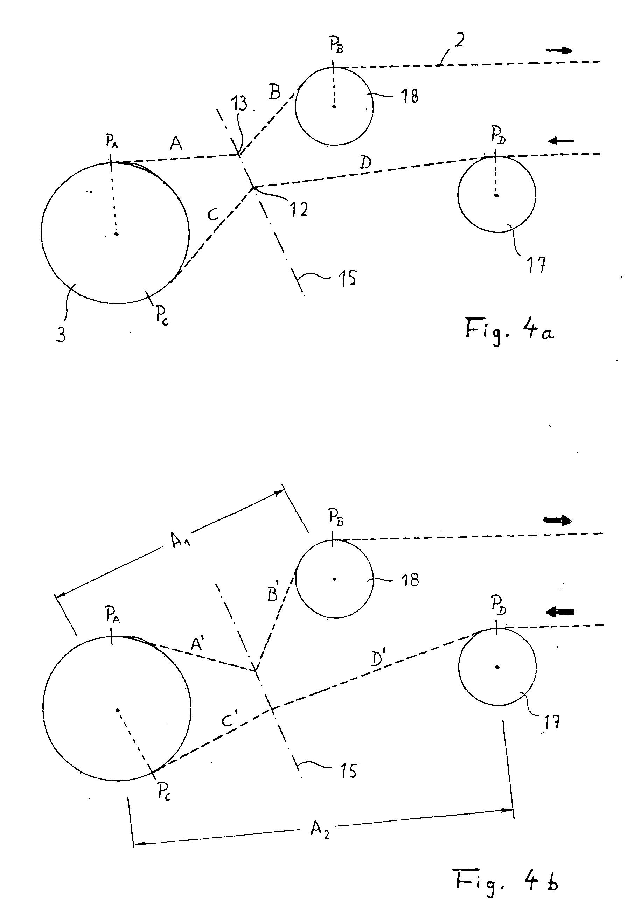

In den Figuren 4a und 4b sind die geometrischen Verhältnisse der Anordnung der Riemenscheiben 3, 12, 13, 17 und 18 schematisch dargestellt. Zur Vereinfachung der Erläuterung sind die auf dem Träger angeordneten Riemenscheiben 12, 13 nur durch ihre Umlenkorte für den Antriebsriemen wiedergegeben. Zu erkennen ist, dass der Abstand $A_1$ der ortsfesten Riemenscheibe 18 zu der Antriebsscheibe 3 geringer ist, als der Abstand $A_2$ der Riemenscheibe 17 zu der Antriebsscheibe 3.

Wesentlich sind ferner die sich im Betrieb einstellenden Längenänderungen der einzelnen Bahnabschnitte. In unbelastetem Zustand (Figur 4a) befinden sich zwischen der Riemenscheibe 17 und der Antriebsscheibe 3 die Bahnabschnitte D und C, wobei diese durch die Riemenscheibe 12 unterteilt werden. Auf dem oberen Trum, d.h. in Riemenlaufrichtung hinter der Antriebsscheibe 3, befinden sich die Bahnabschnitte A und B, wobei Bahnabschnitt A von der Antriebsscheibe 3 bis zu der Riemenscheibe 13, und Bahnabschnitt B von der Riemenscheibe 13 bis zu der ortsfesten Riemenscheibe 18 führt.

Eingetragen in Figur 4a sind ferner die unveränderlichen Bezugspunkte $P_A$, $P_B$, $P_C$ und $P_D$ für das Anliegen des Antriebsriemens 2 auf der Antriebsscheibe 3 bzw. den ortsfesten Riemenscheiben 17, 18.

Figur 4b zeigt demgegenüber dieselben Bahnabschnitte bei belasteter Rollenbahn. A' hat sich gegenüber A verlängert, ebenso B' gegenüber B. Hingegen sind auf den unteren Bahnabschnitten zwischen der Riemenscheibe 17 und der Antriebsscheibe 3 Verkürzungen eingetreten: Bahnabschnitt C' ist kürzer als Bahnabschnitt C, ebenso ist Bahnabschnitt D' kürzer als Bahnabschnitt D. Die Kürzung von C und D fällt aber geringer aus, als die Längung von A und B. Dies führt zum Ausgleich des in dem Riemen 2 unter Last entstehenden Recks. Es gilt demnach die Formel:

$$(A' + B') - (A + B) > (C + D) - (C' + D').$$

Bezugszeichenliste

| | |
|---|---|
| 1 | Walze, Rolle |
| 2 | Antriebsriemen |
| 3 | Antriebsscheibe |
| 4 | Riemenscheibe |
| 5 | Entnahmebereich |
| 6 | Förderband, Horizontalförderer |
| 7 | Sperre |
| 8 | Trägerprofil der Rollenbahn |
| 9 | Rolle |
| 10 | Förderanfang |
| 11 | Einstellschraube |
| 12 | erste Riemenscheibe |
| 13 | zweite Riemenscheibe |
| 14 | Träger |
| 15 | Langlochführung |
| 15a | Führung |
| 16 | Riemenlaufrichtung |
| 17 | Riemenscheibe |
| 18 | Riemenscheibe |
| 19 | Förderende |
| 21 | Obertrum des Antriebsriemens |
| 22 | Untertrum des Antriebsriemens |
| 23 | Buchse |
| 24 | zylindrischer Lagerabschnitt |
| α | Neigungswinkel der Rollenbahn |
| W | Ware/Waren |

**Patentansprüche**

1.  Rollenbahn für zu transportierende und/oder zu lagernde Waren, deren Rollen (1) bzw. Walzen über einen an ihrer Unterseite entlanggeführten, endlosen Antriebsriemen (2) in Drehung versetzbar sind, wobei der Antriebsriemen (2) in Riemenlaufrichtung (16) über eine erste ortsfeste, frei laufende Riemenscheibe (17), über eine motorisch getriebene Antriebsscheibe (3) und über eine zweite ortsfeste, frei laufende Riemenscheibe (18) geführt ist, **dadurch gekennzeichnet, daß**, bezogen auf die Riemenlaufrichtung, eine drilte Riemenscheibe (12) der Antriebsscheibe (3) vorgeschaltet und eine vierte Riemenscheibe (13) der Antriebsscheibe (3) nachgeschaltet ist,
    in der weise, daß der Antriebsriemen (2) auf seinem Weg von der dritten Riemenscheibe (12) zur vierten Riemenscheibe (13) die Antriebsscheibe (3) über einen Winkel von mehr als 180° umschlingt, wobei die dritte und vierte Riemenscheibe (12,13) mit festem Abstand zueinander auf einem gemeinsamen Träger (14) drehbar gelagert sind, der tangential zum Umfang der Antriebsscheibe (3) frei beweglich geführt ist,
    und wobei der Abstand ($A_1$) zwischen der Drehachse der zweiten Riemenscheibe (18) und der Drehachse der Antriebsscheibe (3) geringer ist, als der Abstand ($A_2$) zwischen der Drehachse der ersten Riemenscheibe (17) und der Drehachse der Antriebsscheibe (3).

2.  Rollenbahn nach Anspruch 1, **dadurch gekennzeichnet, daß** der Träger (14) in einer Langlochführung (15) geführt ist.

3.  Rollenbahn nach Anspruch 1 oder Anspruch 2, **dadurch gekennzeichnet, daß** die Führung für den Träger (14) in einem Bogen um die Antriebsscheibe (3) herumführt.

4.  Rollenbahn nach einem der vorangehenden Ansprüche, **gekennzeichnet durch** im Bereich beider Enden der Rollenbahn unter Bildung eines die Rollen in Drehung versetzenden Obertrums (21) und eines passiven Untertrums (22) angeordnete Umlenkmittel für den Antriebsriemen (2), wobei das im Bereich des Förderendes (19) der Rollenbahn angeordnete Umlenkmittel die Antriebsscheibe (3) ist.

5.  Rollenbahn nach Anspruch 4, **dadurch gekennzeichnet, daß** das im Bereich des Förderanfangs (10) der Rollenbahn angeordnete Umlenkmittel eine Riemenscheibe (4) ist, deren Position zur Grundeinstellung der Bandspannung einstellbar ist.

6.  Rollenbahn nach einem der vorangehenden Ansprüche, **dadurch gekennzeichnet, daß** die Rollen (1) oder Walzen mit drehbar angeordneten Kraftübertragungselementen versehen sind, die über den Antriebsriemen (2) in Drehung versetzbar sind, und daß das übertragbare Drehmoment zwischen dem Kraftübertragungselement und der jeweiligen Rolle (1) bzw. Walze geringer ist, als das übertragbare Drehmoment zwischen dem Antriebsriemen (2) und dem Kraftübertragungselement.

7.  Rollenbahn nach Anspruch 6, **dadurch gekennzeichnet, daß** die Rollen (1) oder Walzen mit ihren beiden Enden in feststehenden Profilen der Rollenbahn gelagert sind, und daß das Kraftübertragungselement eine Buchse (23) ist, die mit ihrer Innenfläche außen auf einem mit der Rolle (1) bzw. Walze fest verbundenen, zylindrischen Lagerabschnitt (24) der Rolle bzw. Walze drehbar gelagert ist.

8.  Rollenbahn nach Anspruch 7, **dadurch gekennzeichnet, daß** der Obertrum (21) des Antriebsriemens (2) zwischen den Buchsen (23) und einem Druckwiderlager hindurchgeführt ist, wobei das Druckwiderlager eine gegen die Buchsen (23) zweier aufeinanderfolgender Rollen (1) bzw. Walzen zugleich gerichtete Gegendruckrolle (9) ist.

**9.** Vorrichtung mit einer Rollenbahn nach einem der vorangehenden Ansprüche, **gekennzeichnet durch** einen weiteren Horizontalförderer (6) hinter der Rollenbahn, wobei der Antrieb des weiteren Horizontalförderers (6) von derselben Hauptantriebswelle abgeleitet wird, wie der Antrieb der Antriebsscheibe (3).

**10.** Vorrichtung nach Anspruch 9, **dadurch gekennzeichnet, daß** diese an ihrem Förderende (19) und vor dem weiteren Horizontalförderer (6) mit einer in den Förderweg ragenden, zur Freigabe des Förderweges absenkbaren Sperre (7) versehen ist, und daß der Antrieb der Sperre (7) ebenfalls von der Hauptantriebswelle abgeleitet wird.

**Claims**

**1.** Roller conveyor for goods to be transported and/or stored, the rollers (1) of which can be placed in rotation via an endless drive belt (2) which is guided along against the underside of said rollers, wherein the drive belt (2) is guided in the belt running direction (16) over a first, stationary, freely running belt pulley (17), over a motor-driven belt pulley (3) and over a second, stationary, freely running belt pulley (18), **characterized in that**, with respect to the belt running direction, a third belt pulley (12) is connected upstream of the drive pulley (3) and a fourth belt pulley (13) is connected downstream of the drive pulley (3) in such a way that the drive belt (2) loops round the drive pulley (3) over an angle of more than 180° on its way from the third belt pulley (12) to the fourth belt pulley (13), wherein the third and fourth belt pulleys (12, 13) are mounted in a rotatable manner on a common carrier (14) at a fixed distance from one another, said carrier being guided in a freely movable manner tangentially to the circumference of the drive pulley (3), and wherein the distance ($A_1$) between the axis of rotation of the second belt pulley (18) and the axis of rotation of the drive pulley (3) is smaller than the distance ($A_2$) between the axis of rotation of the first belt pulley (17) and the axis of rotation of the drive pulley (3).

**2.** Roller conveyor according to Claim 1, **characterized in that** the carrier (14) is guided in an elongate-hole guide (15).

**3.** Roller conveyor according to Claim 1 or Claim 2, **characterized in that** the guide for the carrier (14) passes in an arc round the drive pulley (3).

**4.** Roller conveyor according to any of the preceding claims, **characterized by** deflection means for the drive belt (2) which are arranged in the region of both ends of the roller conveyor to form an upper run (21) that places the rollers in rotation and a passive lower run (22), wherein the deflection means arranged in the region of the conveyor end (19) of the roller conveyor is the drive pulley (3).

**5.** Roller conveyor according to Claim 4, **characterized in that** the deflection means arranged in the region of the conveyor start (10) of the roller conveyor is a belt pulley (4), the position of which can be adjusted in order to set the belt tension.

**6.** Roller conveyor according to any of the preceding claims, **characterized in that** the rollers (1) are provided with power transmission elements which are arranged in a rotatable manner and can be placed in rotation via the drive belt (2), and **in that** the torque which can be transmitted between the power transmission element and the respective roller (1) is lower than the torque which can be transmitted between the drive belt (2) and the power transmission element.

**7.** Roller conveyor according to Claim 6, **characterized in that** the rollers (1) are mounted with their two ends in stationary profiles of the roller conveyor, and **in that** the power transmission element is a bush (23) which is mounted in a rotatable manner with its inner face against the outside of a cylindrical bearing section (24) of the roller which is fixedly connected to the roller (1).

**8.** Roller conveyor according to Claim 7, **characterized in that** the upper run (21) of the drive belt (2) is guided through between the bushes (23) and an abutment, wherein the abutment is a counterpressure roller (9) which is oriented against the bushes (23) of two successive rollers (1) at the same time.

**9.** Device comprising a roller conveyor according to any of the preceding claims, **characterized by** a further horizontal conveyor (6) behind the roller conveyor, wherein the drive of the further horizontal conveyor (6) is derived from the same main drive shaft as the drive of the drive pulley (3).

**10.** Device according to Claim 9, **characterized in that** said device is provided at its conveyor end (19) and in front of the further horizontal conveyor (6) with a blocking means (7) which protrudes into the conveying path and can be lowered to free the conveying path, and **in that** the drive of the blocking means (7) is also derived from the main drive shaft.

**Revendications**

**1.** Convoyeur à rouleaux pour marchandises à transporter et/ou à stocker, dont les rouleaux (1) ou cylindres peuvent être mis en rotation par une courroie d'entraînement (2) sans fin, guidée le long de leur face inférieure, la courroie d'entraînement (2) étant guidée, dans le sens de passage (16) de la courroie, par une première poulie à courroie (17) fixe, tournant librement, par une poulie d'entraînement (3) motorisée et par une deuxième poulie à courroie (18) fixe, tournant librement, **caractérisé en ce que**, par rapport au sens de passage de la courroie, une troisième poulie à courroie (12) est montée en amont de la poulie d'entraînement (3), et une quatrième poulie à courroie (13) en aval de la poulie d'entraînement (3), de façon que, sur son parcours de la troisième poulie à courroie (12) vers la quatrième poulie à courroie (13), la courroie d'entraînement (2) entoure la poulie d'entraînement (3) sur un angle supérieur à 180°, la troisième et la quatrième poulie à courroie (12, 13) étant montées à distance fixe l'une de l'autre de manière à pouvoir tourner sur un support (14) commun, qui est guidé librement mobile tangentiellement par rapport à la circonférence de la poulie d'entraînement (3), et la distance ($A_1$) entre l'axe de rotation de la deuxième poulie à courroie (18) et l'axe de rotation de la poulie d'entraînement (3) étant inférieur à la distance ($A_2$) entre l'axe de rotation de la première poulie à courroie (17) et l'axe de rotation de la poulie d'entraînement (3).

2. Convoyeur à rouleaux selon la revendication 1, **caractérisé en ce que** le support (14) est guidé dans un guide à trou oblong (15).

3. Convoyeur à rouleaux selon la revendication 1 ou 2, **caractérisé en ce que** le guide pour le support (14), est guidé suivant un arc autour de la poulie d'entraînement (3).

4. Convoyeur à rouleaux selon l'une des revendications précédentes, **caractérisé par** des moyens de renvoi de la courroie d'entraînement (2), disposés dans la zone des deux extrémités du convoyeur à rouleaux, en formant un brin supérieur (21) mettant en rotation les rouleaux, et un brin inférieur (22) passif, le moyen de renvoi, disposé dans la zone de fin de transport (19) du convoyeur à rouleaux, étant le disque d'entraînement (3).

5. Convoyeur à rouleaux selon la revendication 4, **caractérisé en ce que** le moyen de renvoi, disposé dans la zone du début de transport (10) du convoyeur à rouleaux, est une poulie à courroie (4) dont la position est réglable par rapport au réglage de base de la tension de la bande.

6. Convoyeur à rouleaux selon l'une des revendications précédentes, **caractérisé en ce que** les rouleaux (1) ou cylindres sont dotés d'éléments de transmission des forces disposés tournants, qui peuvent être mis en rotation par la courroie d'entraînement (2), et **en ce que** le couple de rotation pouvant être transmis est inférieur, entre l'élément de transmission des forces et le rouleau (1) ou cylindre correspondant, au couple de rotation pouvant être transmis entre la courroie d'entraînement (2) et l'élément de transmission des forces.

7. Convoyeur à rouleaux selon la revendication 6, **caractérisé en ce que** les rouleaux (1) ou cylindres sont montés, par leurs deux extrémités, dans des profilés fixes du convoyeur à rouleaux, et **en ce que** l'élément de transmission des forces est une douille (23) qui, par sa surface intérieure, est montée tournante à l'extérieur sur un troncon de palier (24) cylindrique, du rouleau ou cylindre, solidaire du rouleau (1) ou cylindre.

8. Convoyeur à rouleaux selon la revendication 7, **caractérisé en ce que** le brin supérieur (21) de la courroie d'entraînement (2) est guidé entre les douilles (23) et une contre-butée de pression, la contre-butée de pression étant un contre-rouleau de pression (9) dirigé en même temps contre les douilles (23) de deux rouleaux (1) ou cylindres successifs.

9. Dispositif comportant un convoyeur à rouleaux selon l'une des revendications précédentes, **caractérisé par** un autre transporteur horizontal (6) derrière le convoyeur à rouleaux, l'entraînement de l'autre transporteur horizontal (6) étant dérivé du même arbre d'entraînement principal que l'entraînement de la poulie d'entraînement (3).

10. Dispositif selon la revendication 9, **caractérisé en ce que** celui-ci est doté, en sa fin de transport (19) et avant l'autre transporteur horizontal (6), d'une barrière (7) s'engageant dans la voie de transport et pouvant être abaissée pour libérer la voie de transport, et **en ce que** l'entraînement de la barrière (7) est également dérivé de l'arbre d'entraînement principal.

Fig. 1a

Fig. 1b

EP 1 447 356 B1

Fig. 2 a

Fig. 2 b

Fig. 3

$P_B$

2

B

13

18

$P_A$

A

D

$P_D$

12

C

15

3

$P_C$

17

Fig. 4a

$A_1$

$P_B$

B'

18

$P_A$

A'

D'

$P_D$

C'

15

$P_C$

17

$A_2$

Fig. 4b